(19) Europäisches Patentamt / European Patent Office / Office européen des brevets

(11) **EP 3 041 102 B1**

(12) **FASCICULE DE BREVET EUROPEEN**

(45) Date de publication et mention
de la délivrance du brevet:
**03.02.2021 Bulletin 2021/05**

(51) Int Cl.:
*H02H 1/06* *(2006.01)*  *H02H 3/24* *(2006.01)*

(21) Numéro de dépôt: **15199872.1**

(22) Date de dépôt: **14.12.2015**

(54) **DISPOSITIF D'ALIMENTATION CAPACITIVE POUR DISPOSITIF DE COMMANDE D'APPAREIL DE COUPURE ÉLECTRIQUE**

KAPAZITIVE EINSPEISEVORRICHTUNG ZUR STEUERUNG EINES ELEKTRISCHEN ABSCHALTUNGSGERÄTS

CAPACITIVE POWER SUPPLY FOR A DEVICE FOR CONTROLLING A POWER SWITCHING DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.12.2014 FR 1463424**

(43) Date de publication de la demande:
**06.07.2016 Bulletin 2016/27**

(73) Titulaire: **Schneider Electric Industries SAS
92500 Rueil-Malmaison (FR)**

(72) Inventeurs:
• **VINCENT, François
38050 Grenoble Cedex 09 (FR)**
• **BORDET, Bruno
38050 Grenoble Cedex 09 (FR)**

(74) Mandataire: **Lavoix
2, place d'Estienne d'Orves
75441 Paris Cedex 09 (FR)**

(56) Documents cités:
**EP-A2- 2 469 573    CN-A- 103 209 513
US-A- 4 331 996    US-A- 4 890 184
US-A- 5 563 758**

**Description**

La présente invention concerne un dispositif d'alimentation capacitive pour dispositif de commande d'appareil de coupure électrique, ayant deux bornes d'entrée et une tension d'alimentation entre les deux bornes, et apte à fournir un courant d'alimentation à un module de commande apte à commander ledit appareil de coupure électrique lorsque la tension d'alimentation est inférieure à un seuil d'actionnement prédéterminé.

L'invention concerne également un dispositif de commande d'appareil de coupure électrique associé.

L'invention se situe dans le domaine des appareils de coupure électrique, notamment de disjonction, et en particulier des dispositifs de commande de disjoncteur électrique en cas de sous-tension.

Un des problèmes dans ce domaine est la réalisation d'un dispositif de commande d'appareil de coupure électrique en cas de sous-tension, qui soit de faible encombrement afin d'être apte à être installé dans un petit logement d'un appareil de coupure, un tel dispositif de commande étant un dispositif basse tension.

Pour l'alimentation d'un tel dispositif de commande il est nécessaire d'utiliser un dispositif d'alimentation basse tension.

Un tel dispositif de commande d'appareil de coupure a des spécifications de fonctionnement données, il doit être alimenté par un courant supérieur ou égal à une valeur minimale de fonctionnement, dans une plage de tension d'alimentation donnée, définie par une borne inférieure et une borne supérieure, assurant le bon fonctionnement du dispositif de commande. En plus, le fonctionnement doit être fiable et sans oscillations autour de certains seuils prédéfinis. Enfin, il est préférable de maintenir la dissipation thermique dans le dispositif de commande inférieure à un niveau donné afin d'éviter une surchauffe et un dysfonctionnement de l'appareil de coupure connecté.

Il est connu d'utiliser des alimentations capacitives pour l'alimentation d'appareils basse tension, notamment pour des équipements électroménagers. L'avantage de telles alimentations est d'être peu coûteuses, et de présenter un faible encombrement.

Cependant, l'utilisation d'une alimentation capacitive de type connu, comprenant un condensateur connecté en entrée de moyens de redressement de tension, n'est pas adaptée pour l'alimentation d'un dispositif de commande tel que décrit ci-dessus, car le niveau de courant délivré augmente avec la tension d'alimentation. De ce fait, pour assurer la délivrance du niveau de courant requis sur la plage de tension d'alimentation prédéfinie, une telle alimentation capacitive classique induirait une dissipation thermique trop importante dans le dispositif de commande pour des valeurs de tension d'alimentation proches de la borne supérieure de la plage de tension d'alimentation prédéfinie.

Ainsi, une telle alimentation capacitive ne permettrait pas un fonctionnement satisfaisant adapté à des variations importantes de la tension d'alimentation dans une grande plage de tensions.

Le brevet US 5 563 758 A décrit un dispositif d'alimentation capacitive, qui permet de fournir une tension d'alimentation en entrée d'un convertisseur DC/DC.

Le document US 4331996 A décrit un dispositif de commande d'appareil de coupure électrique, comportant un dispositif d'alimentation capacitive et un organe de commande apte à commander ledit appareil de coupure électrique en cas de sous-tension.

Le document EP 2 469 573 A2 décrit un circuit de disjonction comprenant un bloc de redressement.

Le document CN 103209513 A concerne un éclairage LED à haute puissance avec un circuit limiteur abaisseur. Des interrupteurs sont contrôlées en alternance pendant un cycle de la tension alternative pour modifier l'impédance série effective dans le circuit et par la suite, le courant augmente et décroît. L'invention a pour objet de remédier à au moins un des inconvénients de l'art antérieur précités.

A cet effet, l'invention propose un dispositif de commande d'appareil de coupure électrique selon la revendication 1.

Le dispositif de commande d'appareil de coupure électrique selon l'invention peut également présenter une ou plusieurs des caractéristiques selon les revendications 2 à 9.

Avantageusement, la mise en œuvre d'un deuxième condensateur sous le contrôle d'un commutateur en fonction de la tension d'alimentation permet d'ajuster une tension de commande du dispositif de commande, et donc le niveau de courant fourni au dispositif de commande, permettant de le faire fonctionner pour commander l'appareil de coupure tout en limitant la dissipation thermique.

D'autres caractéristiques et avantages de l'invention ressortiront de la description qui en est donnée ci-dessous, à titre indicatif et nullement limitatif, en référence aux figures annexées, parmi lesquelles :

- la figure 1 illustre schématiquement un dispositif de commande d'appareil de coupure électrique selon un premier mode de réalisation de l'invention ;
- la figure 2 illustre schématiquement un dispositif de commande d'appareil de coupure électrique selon un deuxième mode de réalisation de l'invention ;
- la figure 3 illustre schématiquement un diagramme d'évolution du courant d'alimentation d'un organe de commande selon l'invention.

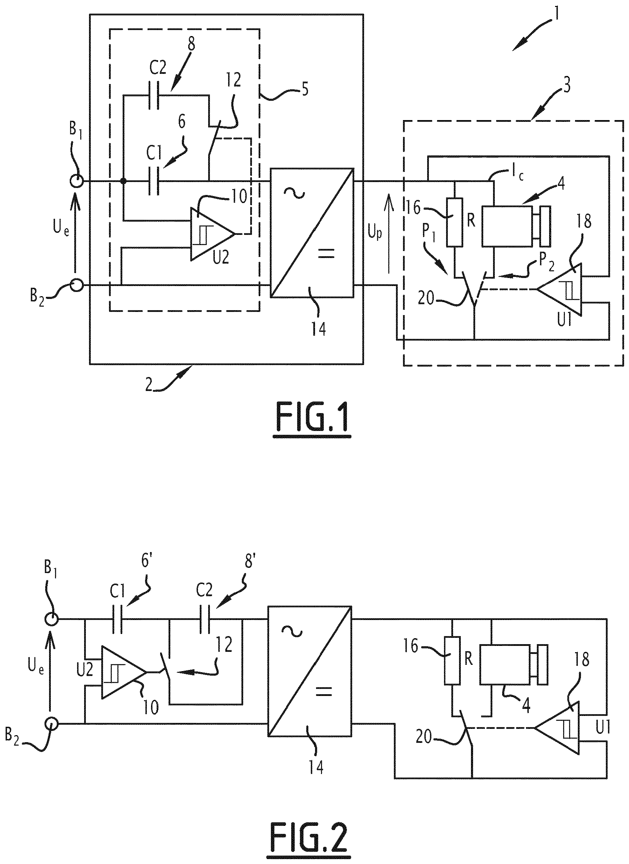

La figure 1 illustre schématiquement un dispositif 1 de commande d'appareil de coupure électrique, cet appareil n'étant pas représenté. Par exemple, un tel appareil de coupure électrique est un disjoncteur.

Le dispositif 1 de commande de coupure d'appareil électrique est un dispositif de commande dit « à manque de tension », qui provoque une disjonction lorsque la tension d'alimentation $U_e$, prise entre des bornes

$B_1$ et $B_2$, descend en dessous d'un seuil d'actionnement donné $U_t$, qui est de préférence exprimé en pourcentage d'une tension nominale donnée $U_n$.

La tension d'alimentation $U_e$ est dans cet exemple la tension d'un réseau électrique, par exemple un réseau triphasé.

Par exemple, selon un gabarit donné, la tension nominale $U_n$ est comprise entre une tension nominale minimale $U_{n\_min}$ et une tension nominale maximale $U_{n\_max}$, le seuil d'actionnement $U_t$ est de $0,7 x U_{n\_min}$, donc le seuil d'actionnement est atteint lorsque la tension d'alimentation atteint 70% de la tension nominale minimale.

Par exemple, $U_{n\_min}=220$ V (Volts) et $U_{n\_max}=240$ V, et donc $U_t=154$ V.

Le dispositif 1 de commande de coupure comprend un module d'alimentation 2 et un module de commande 3, comprenant un organe de commande 4, qui est de préférence un actionneur à bobine. L'organe de commande 4 est alimenté par un courant d'alimentation $I_c$, typiquement compris entre 7 à 10 mA (milliampères). Lorsque le courant d'alimentation $I_c$ est supérieur à une valeur minimale de courant, appelée également valeur de maintien $I_{s-min}$ donnée, l'organe de commande 4 est ré-armé et la fermeture de l'appareil de coupure est autorisée. A l'inverse, lorsque le courant d'alimentation $I_c$ est inférieur à la valeur minimale de courant $I_{s-min}$, l'organe de commande 4 déclenche la commande de l'appareil de coupure.

Le module d'alimentation 2 comprend un bloc d'entrée capacitif 5, comprenant un premier condensateur 6, de capacité $C_1$, et un deuxième condensateur 8, de capacité $C_2$, monté en parallèle avec le premier condensateur 6 selon le premier mode de réalisation illustré à la figure 1.

Le bloc d'entrée capacitif 5 comprend en outre un premier comparateur de tension 10, branché entre les bornes d'alimentation $B_1$ et $B_2$, et un premier commutateur 12, apte à commuter entre une position fermée, permettant de commuter le deuxième condensateur 8 dans le module d'alimentation 2, et une position ouverte, permettant de débrancher le deuxième condensateur 8 du module d'alimentation 2.

Le premier commutateur 12 est commandé par la sortie du premier comparateur de tension 10, adapté à comparer la tension d'alimentation $U_e$ à une tension $U_c$ de seuil de commutation du condensateur.

La tension $U_c$ de seuil de commutation du condensateur est déterminée, en relation avec les valeurs des capacités $C_1$ et $C_2$, de manière à maintenir le courant d'alimentation $I_c$ fourni à l'organe de commande 4 inférieur à un seuil de courant maximal $I_{s-max}$ prédéterminé, comme expliqué plus en détail ci-après.

Ainsi, avantageusement, le gabarit de fonctionnement du dispositif de commande de coupure électrique est respecté, et la puissance dissipée dans l'organe de commande 4 est inférieure à une limite thermique prédéterminée, par exemple égale à 1,1 Watts.

Il est à noter que le premier comparateur de tension 10 est représenté schématiquement, et comprend, de manière classique, des résistances de réglage et un détecteur de crête positive permettant de régler la tension de comparaison $U_c$ en fonction de la tension référence U2 du premier comparateur de tension 10. En effet, de manière connue, un comparateur de tension a une tension de référence intrinsèque et une valeur d'hystérésis $H_2$ associée.

Les sorties du bloc d'entrée capacitif 5 sont connectées à un bloc de redressement 14 à double alternance, par exemple constitués par un pont de diodes. Le bloc de redressement 14 incorpore de manière classique un filtrage réalisé au moyen d'un condensateur.

Les bornes de sortie du bloc de redressement 14 alimentent, en continu, le module de commande 3. La tension en sortie du bloc de redressement 14 est notée tension $U_p$.

Le module de commande 3 comprend en plus un élément résistif 16, ayant une résistance R, un deuxième comparateur de tension 18 et un deuxième commutateur 20.

Le deuxième commutateur 20 est apte à basculer entre une première position $P_1$ dans laquelle l'élément résistif 16 est connecté en sortie du bloc de redressement 14, et une deuxième position $P_2$, dans laquelle l'organe de commande 4 est branché en sortie du bloc de redressement 14, l'élément résistif 16 étant déconnecté.

Le basculement entre la position $P_1$ et la position $P_2$ du deuxième commutateur 20 est commandée par la sortie du deuxième comparateur de tension 18.

Le deuxième comparateur de tension 18 est adapté à comparer la tension $U_p$ en sortie du bloc de redressement 14 à une tension $U_s$ de seuil de commutation de commande.

La tension $U_s$ de seuil de commutation de commande est fixée en fonction de la tension d'alimentation $U_e$. De préférence, la tension $U_s$ de seuil de commutation de commande est telle que la tension d'alimentation $U_e$ soit égale au seuil d'actionnement $U_t=0,7 x U_{n\_min}$.

Il est à noter que le deuxième comparateur de tension 18 est représenté schématiquement, et comprend, de manière classique, des résistances de réglage permettant de régler la tension de comparaison $U_s$ en fonction de la tension de référence $U_1$ du deuxième comparateur de tension 18. En effet, de manière connue, un comparateur de tension a une tension de référence intrinsèque et une valeur d'hystérésis $H_1$ associée.

Avantageusement, la valeur de résistance R est choisie inférieure à la résistance R' de l'organe de commande 4. Par exemple pour un organe de commande 4 à bobine, la résistance R' est la résistance de la bobine à froid, à une température inférieure à moins 25°C.

La résistance R étant inférieure à la résistance R' de l'organe de commande 4, le courant consommé par l'élément résistif 16 est supérieur, faisant diminuer la tension $U_p$ de sortie du bloc de redressement 14. Cela génère un effet d'hystérésis $H_1$ qui évite des oscillations du deuxième commutateur 20 si la tension d'alimentation $U_e$ se stabilise autour de la tension $U_t$.

Par exemple, l'utilisation d'une résistance R inférieure de 5% à la résistance R' de l'organe de commande 4 permet de fiabiliser le fonctionnement du dispositif de commande. Cette différence permettra de garantir une hystérésis $H_1$ minimum de 10% à la température de référence de 25°C.

Dans un second mode de réalisation, illustré à la figure 2, le module d'alimentation comprend deux condensateurs 6', 8' montés en série et non en parallèle. Dans ce deuxième mode de réalisation le premier commutateur 12 est en position « ouverte » lorsque la tension d'alimentation $U_e$ est inférieure à la tension $U_c$ de seuil de commutation de condensateur, et en position « fermée » lorsque la tension d'alimentation est supérieure à $U_c$.

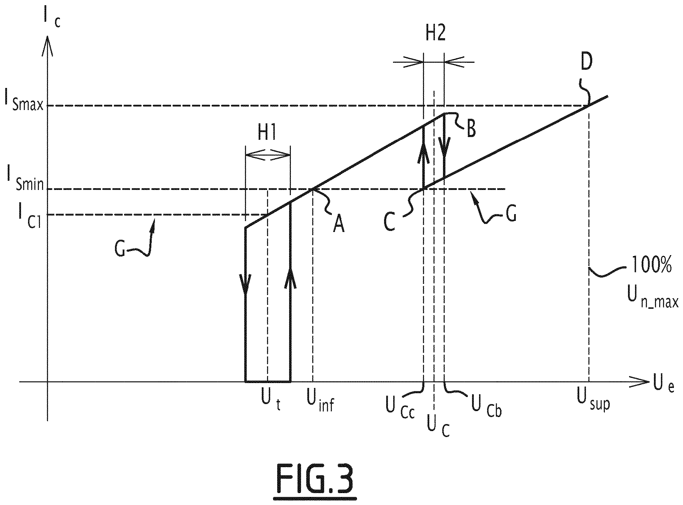

La figure 3 illustre schématiquement le diagramme d'évolution du courant d'alimentation $I_c$ de l'organe de commande 4 en fonction de la tension d'alimentation $U_e$, selon des évolutions en tension d'alimentation montante ou descendante, comme indiqué par les flèches représentées.

La différence entre le fonctionnement en tension montante et le fonctionnement en tension descendante est due à l'existence d'hystérésis $H_2$ dans le module d'alimentation 2, et d'hystérésis $H_1$ dans le module de commande 3.

Lorsque la tension d'alimentation $U_e$ augmente, à partir de la valeur 0V jusqu'au seuil d'actionnement $U_t=0{,}70 \times U_{n\_min}$, le premier commutateur 12 est en position fermée, le deuxième condensateur 8 est branché, tandis que le deuxième commutateur 20 est en position $P_1$, l'organe de commande 4 n'est pas alimenté.

Lorsque la tension d'alimentation atteint un premier seuil de tension $U_{inf}$ supérieur ou égal au seuil d'actionnement $U_t$, la tension $U_p$ de sortie du bloc de redressement 14 atteint la tension $U_s$ de seuil de commutation de commande, le deuxième commutateur 20 bascule en position $P_2$, le courant d'alimentation $I_c$ passe à une valeur $I_{c1}$.

Lorsque la tension d'alimentation atteint la valeur de tension égale à la borne inférieure $U_{inf}$ de la plage de tension assurant le bon fonctionnement de l'organe de commande 4, le courant d'alimentation $I_c$ est égal valeur minimale courant $I_{s-min}$, niveau de courant permettant le réarmement de l'organe de commande 4 et la fermeture du disjoncteur branché en aval.

Dans le mode de réalisation illustré, $U_{inf}=0{,}85 \times U_{n\_min}$, cette valeur étant prédéfinie selon un gabarit de bon fonctionnement de l'organe de commande 4.

Sur la figure 3, le gabarit G de bon fonctionnement de l'organe de commande 4 est représenté en traits pointillés. Le gabarit G comprend notamment quatre points de bon fonctionnement, notés A, B, C et D sur la figure, qui vont permettre de déterminer les valeurs des capacités $C_1$, $C_2$, de la valeur $U_c$ de seuil de commutation du condensateur et de l'hystérésis $H_2$.

Lorsque la tension d'alimentation atteint la valeur $U_c$ de seuil de commutation du condensateur, le premier commutateur 12 passe en position ouverte, seul le premier condensateur 6 restant dans le module d'alimentation 2. L'effet de ce changement est de faire diminuer la tension en sortie du bloc de redressement 14, à un niveau tel que le module de commande est alimenté par un courant égal à la valeur minimale de courant $I_{s-min}$.

Le niveau de courant d'alimentation de l'organe de commande 4 ne dépasse pas la valeur maximale de courant $I_{s-max}$, correspondant au maximum de dissipation thermique autorisé dans le l'organe de commande, pour la tension d'alimentation maximale prévue dans le gabarit de fonctionnement, égale à la borne supérieure $U_{sup}$ de la plage de tension assurant le bon fonctionnement de l'organe de commande 4 (point D du gabarit de la figure 3).

Par exemple, $U_{sup}=1{,}1 \times U_{n\_max}$.

La valeur maximale de courant $I_{s-max}$ est telle que la dissipation thermique dans l'organe de commande 4 est inférieure ou égale à une valeur donnée, par exemple 1,1 Watts. La valeur maximale de courant $I_{s-max}$ est donc sélectionnée en fonction d'une contrainte thermique maximale.

Pour réaliser le fonctionnement illustré à la figure 3, la capacité $C_1$ est sélectionnée pour que le courant d'alimentation $I_c$ fourni à l'organe de commande 4, lorsque seul le premier condensateur 6 de capacité $C_1$ est présent dans le module d'alimentation, soit égal à $I_{s-max}$ pour la tension d'alimentation maximale $U_{sup}$ prévue dans le gabarit de fonctionnement (point D du gabarit de la figure 3).

La capacité $C_2$ est sélectionnée de manière à ce que, lorsque les deux condensateurs 6 et 8 sont branchés en parallèle dans le module d'alimentation 2, le niveau de courant $I_c$ fourni à l'organe de commande 4 soit au moins égal à la valeur minimale de courant $I_{s-min}$ lorsque la tension d'alimentation est égale à la borne inférieure $U_{inf}$ de tension de la plage de bon fonctionnement (point A du gabarit de la figure 3).

La tension $U_c$ de seuil de commutation du condensateur est déterminée comme étant la valeur de tension d'alimentation telle que le courant d'alimentation fourni au module de commande atteint la valeur maximale de courant $I_{s-max}$, lorsque les deux condensateurs sont branchés dans le module d'alimentation (point B du gabarit de la figure 3). La valeur $U_c$ de seuil de commutation du condensateur est calculée en tenant compte du point C du gabarit de la figure 3, qui assure que le courant $I_c$ fourni au module de commande ne devient pas inférieur à la valeur minimale de courant de maintien $I_{s-min}$ tant que la tension d'alimentation $U_e$ est supérieure à $U_{inf}$. La valeur de l'hystérésis $H_2$ du premier comparateur de tension 10 est également calculée en fonction des tensions $U_{cc}$ au point C du gabarit et $U_{cb}$ au point B du gabarit.

Par exemple, un mode de réalisation du calcul des valeurs des capacités $C_1$, $C_2$ en fonction des points A et D du gabarit G, et des valeurs de tension $U_c$ de seuil de commutation du condensateur et de l'hystérésis $H_2$ en fonction des points B et C du gabarit G, est détaillé ci-après.

L'approche utilisée est une approche simplifiée.

On considère que le module d'alimentation a une impédance $Z_2$ et le module de commande a une impédance $Z_4$.

L'impédance $Z_2$ du module d'alimentation est principalement capacitive, égale à $C_1+C_2$ lorsque la tension $U_e$ est inférieure à $U_c$ et égale à $C_1$ lorsque la tension $U_e$ est supérieure à $U_c$.

L'impédance $Z_4$ du module de commande est principalement constituée de la résistance R.

Le courant $I_c$ dans l'organe de commande 4 est donné par la relation :

$$\left|I_c\right| = \frac{\left|U_e\right|}{\left|Z_4\right| + \left|Z_2\right|} \qquad (1)$$

En notant : $\left|Z_t\right| = \left|Z_4\right| + \left|Z_2\right|$ $\qquad$ (2)

La relation (1) s'écrit :

$$\left|I_c\right| = \frac{\left|U_e\right|}{\left|Z_t\right|} \qquad (3)$$

Et :

$$\left\|Z_t\right\| = \sqrt{R^2 + \frac{1}{C_T^2\omega^2}} \qquad (4)$$

Où $C_T$ représente la capacité équivalente du dispositif de commande de coupure 1 et $\omega$ la pulsation de la tension d'alimentation $U_e$.

La valeur $C_T$ dépend de la position du premier commutateur 12, qui dépend de la valeur de la tension d'alimentation $U_e$.

Lorsque la tension d'alimentation $U_e$ est inférieure à $U_c$, alors le premier commutateur 12 est fermé et $C_T = C_1 + C_2$.

Lorsque la tension d'alimentation $U_e$ est supérieure à $U_c$, alors le premier commutateur 12 est ouvert et $C_T = C_1$.

En combinant les relations (3) et (4) on obtient :

$$C_T = \sqrt{\frac{1}{\left(\dfrac{U_e^2}{I_c^2} - R^2\right)\omega^2}} \qquad (5)$$

Et

$$U_e = \sqrt{R^2 + \frac{I_c^2}{C_T^2\omega^2}} \qquad (6)$$

La relation (5) est utilisée pour déterminer $C_1$ et $C_2$ par encadrement successif des points de fonctionnement A et D du gabarit G.

Au point de fonctionnement A, on a : $U_e = U_{inf}$, qui est inférieur à $U_c$, par conséquent le premier commutateur 12 est fermé, donc $C_T = C_1 + C_2$. Il s'ensuit :

$$C_1 + C_2 = \sqrt{\frac{1}{\left(\dfrac{U_{inf}^2}{I_{s-min}^2} - R^2\right)\omega^2}} \qquad (7)$$

Au point de fonctionnement D, $U_e = U_{sup}$ qui est supérieur à $U_c$, donc le premier commutateur 12 est ouvert, $C_T = C_1$ et il s'ensuit :

$$C_1 = \sqrt{\frac{1}{\left(\dfrac{U_{sup}^2}{I_{s-max}^2} - R^2\right)\omega^2}} \qquad (8)$$

La relation (8) permet de déterminer $C_1$, et $C_2$ est obtenu ensuite à partir de la relation (7), en soustrayant la valeur de $C_1$ préalablement calculée.

Après calcul des valeurs des capacités $C_1$ et $C_2$, la relation (6) est utilisée pour déterminer la tension $U_c$ de seuil de commutation du condensateur et l'hystérésis $H_2$ maximum admissible pour respecter les critères de fonctionnement sur $I_c$ : $I_{s-min} \leq I_c \leq I_{s-max}$, correspondant aux points de fonctionnement B et C du gabarit G.

Au point de fonctionnement B, la tension $U_{cb}$ au-dessus de laquelle le courant $I_c$ est supérieur à la valeur maximale de courant $I_{s-max}$ est déterminée par la relation (6), dans laquelle $C_T = C_1 + C_2$ car le premier commutateur 12 est fermé :

$$U_{cb} = \sqrt{R^2 + \frac{I_{s-max}^2}{(C_1 + C_2)^2\omega^2}} \qquad (9)$$

Au point de fonctionnement C, la tension $U_{cc}$

au-dessous de laquelle le courant Ic est inférieur à la valeur minimale de courant $I_{s-min}$ est déterminée par la relation (6), dans laquelle $C_T = C_1$, car le premier commutateur 12 est ouvert :

$$U_{cc} = \sqrt{R^2 + \frac{I_{s-min}^2}{C_1^2 \omega^2}} \quad (10)$$

Par la suite, après calcul des valeurs $U_{cb}$ et $U_{cc}$, on détermine :

$$U_c = \frac{U_{cc} + U_{cb}}{2} \quad (11)$$

Et

$$H_2 = U_{cb} - U_{cc} \quad (12)$$

Dans un exemple numérique, nullement limitatif, si $I_{s-min}$=7mA et $I_{s-max}$=10mA, $U_{inf}$=176V, $U_{sup}$=305V, R=5500$\Omega$ (Ohms) et f=50Hz (Hertz) avec $\omega = 2\pi f$, on obtient :$C_1$=106nF (nano-Farads), $C_2$=29nF, $U_c$=240V et $H_2$=34,9V.

Ainsi, le dispositif 1 est calibré pour que le courant d'alimentation de l'organe de commande 4 respecte les conditions de fonctionnement fournies par le gabarit G prédéterminé, tout en ne dépassant pas une valeur maximale de courant $I_{s-max}$, de manière à assurer également une limitation de la dissipation thermique à un niveau prédéterminé.

Le module d'alimentation 2 du dispositif 1 a un faible coût de fabrication et présente un encombrement faible.

**Revendications**

1. Dispositif de commande d'appareil de coupure électrique, comportant un dispositif d'alimentation capacitive et un organe de commande (4) apte à commander ledit appareil de coupure électrique lorsque la tension d'alimentation est inférieure à un seuil (Ut) d'actionnement prédéterminé, le dispositif d'alimentation capacitive comportant un module d'alimentation (2) ayant deux bornes d'entrée et une tension d'alimentation ($U_e$) entre les deux bornes, et apte à fournir un courant d'alimentation à l'organe de commande (4), le module d'alimentation (2) comportant un premier condensateur (6, 6') connecté en entrée d'un bloc de redressement de tension (14), ledit organe de commande (4) étant connecté en sortie du bloc de redressement (14),
le dispositif d'alimentation comportant en outre un deuxième condensateur (8, 8') et un premier commutateur (12), apte à connecter le deuxième condensateur (8, 8') en série ou en parallèle en sortie avec le premier condensateur en fonction d'une comparaison de la tension d'alimentation ($U_e$) à une valeur ($U_c$) de seuil de commutation de condensateur.

2. Dispositif de commande d'appareil de coupure électrique selon la revendication 1 **caractérisé en ce que** les valeurs des capacités ($C_1$, $C_2$) desdits premier (6, 6') et deuxième (8, 8') condensateur et la valeur ($U_c$) de seuil de commutation de condensateur sont déterminées de manière à ce que le courant d'alimentation fourni à l'organe de commande (4) ne soit ni inférieur à une valeur minimale de courant ($I_{s-min}$), ni supérieur à une valeur maximale de courant ($I_{s-max}$) tant que la tension d'alimentation ($U_e$) est comprise entre une borne inférieure ($U_{inf}$) et une borne supérieure ($U_{sup}$) d'une plage de tension de fonctionnement prédéterminée.

3. Dispositif de commande d'appareil de coupure électrique selon la revendication 2, **caractérisé en ce que** la valeur maximale de courant ($I_{s-max}$) correspond à une dissipation thermique dans l'organe de commande (4) inférieure ou égale à un niveau de dissipation thermique prédéterminé.

4. Dispositif de commande d'appareil de coupure électrique selon l'une des revendications 1 à 3, **caractérisé en ce qu'**il comporte un module de commande (3), ledit organe de commande (4) faisant partie dudit module de commande (3), l'organe de commande (4) ayant une valeur (R') de résistance associée, le module de commande (3) comportant en outre un élément résistif (16) monté en sortie du bloc de redressement (14), et un deuxième commutateur (20) apte à effectuer un basculement entre la connexion dudit élément résistif (16) et la connexion de l'organe de commande (4) en sortie du bloc de redressement (14), ledit élément résistif (16) ayant une valeur de résistance (R) inférieure à la valeur de résistance dudit organe de commande (4).

5. Dispositif de commande d'appareil de coupure électrique selon la revendication 4, **caractérisé en ce que** le deuxième commutateur (20) bascule entre la connexion dudit élément résistif (16) et la connexion dudit organe de commande (4) lorsque la tension ($U_p$) en sortie du bloc de redressement (14) dépasse un seuil de commutation de commande correspondant à une tension d'alimentation ($U_e$) sensiblement égale au seuil (Ut) d'actionnement prédéterminé.

6. Dispositif de commande d'appareil de coupure électrique selon la revendication 4 ou 5, **caractérisé en ce que** la valeur de résistance (R) de l'élément résistif (16) est inférieure à la valeur (R') de résistance de l'organe de commande (4), de manière à assurer une valeur d'hystérésis (H1) prédéterminée du deuxième commutateur.

7. Dispositif de commande d'appareil de coupure électrique selon l'une quelconque des revendications 1 à 6, **caractérisé en ce que** la valeur de capacité ($C_1$) du premier condensateur (6) est déterminée de manière à ce que le courant d'alimentation ($I_c$) fourni à l'organe de commande (4), lorsque seul le premier condensateur (6) est branché dans le module d'alimentation (2), soit égal à la valeur maximale de courant ($I_{s-max}$) lorsque la tension d'alimentation ($U_e$) est égale à ladite borne supérieure ($U_{sup}$) de tension.

8. Dispositif de commande d'appareil de coupure électrique selon la revendication 7, **caractérisé en ce que** la valeur de capacité ($C_2$) du deuxième condensateur (8) est déterminée de manière à ce que lorsque lesdits premier (6) et deuxième (8) condensateurs sont branchés dans le module d'alimentation (2), le niveau de courant ($I_c$) fourni à l'organe de commande (4) soit au moins égal à la valeur minimale de courant ($I_{s-min}$) lorsque la tension d'alimentation ($U_e$) est égale la borne inférieure ($U_{inf}$) de tension.

9. Dispositif de commande d'appareil de coupure électrique selon l'une quelconque des revendications 7 ou 8, **caractérisé en ce que** la valeur ($U_c$) de seuil de commutation de condensateur et une valeur d'hystérésis (H2) associée sont déterminées en fonction d'une valeur de tension d'alimentation ($U_{cb}$) pour laquelle le courant d'alimentation fourni à l'organe de commande (4) atteint la valeur maximale de courant ($I_{s-max}$), lorsque lesdits premier (6) et deuxième (8) condensateurs sont branchés dans le module d'alimentation capacitive (2), et d'une valeur de tension d'alimentation ($U_{cc}$) pour laquelle le courant d'alimentation fourni à l'organe de commande (4) atteint la valeur minimale de courant ($I_{s-min}$), lorsque seul ledit premier (6) condensateur est branché dans le module d'alimentation capacitive (2).

**Patentansprüche**

1. Steuervorrichtung für ein elektrisches Schaltgerät, die eine kapazitive Versorgungsvorrichtung und ein Steuerelement (4) aufweist, das geeignet ist, das elektrischen Schaltgerät anzusteuern, wenn die Versorgungsspannung unter einem vorbestimmten Betätigungsschwellenwert (Ut) liegt, wobei die kapazitive Versorgungsvorrichtung ein Versorgungsmodul (2) mit zwei Eingangsklemmen und einer Versorgungsspannung ($U_e$) zwischen den zwei Klemmen aufweist und geeignet ist, einen Versorgungsstrom an das Steuerelement (4) zu liefern, wobei das Versorgungsmodul (2) einen ersten Kondensator (6, 6') aufweist, der mit dem Eingang eines Spannungsgleichrichterblocks (14) verbunden ist und das Steuerelement (4) mit dem Ausgang des Gleichrichterblocks (14) verbunden ist, wobei die Versorgungsvorrichtung außerdem einen zweiten Kondensator (8, 8') und einen ersten Schalter (12) aufweist, der geeignet ist, den zweiten Kondensator (8, 8') am Ausgang in Reihe zu oder parallel mit dem ersten Kondensator abhängig von einem Vergleich der Versorgungsspannung ($U_e$) mit einem Schwellenwert ($U_c$) des Schaltens des Kondensators zu verbinden.

2. Steuervorrichtung für ein elektrisches Schaltgerät nach Anspruch 1, **dadurch gekennzeichnet, dass** die Kapazitätswerte ($C_1$, $C_2$) des ersten (6, 6') und zweiten (8, 8') Kondensators und der Schwellenwert ($U_c$) des Schaltens des Kondensators derart bestimmt sind, dass der dem Steuerelement (4) gelieferte Versorgungsstrom weder kleiner als ein Minimalwert ($I_{Smin}$) des Stroms noch größer als ein Maximalwert (Ismax) des Stroms ist, sofern die Versorgungsspannung ($U_e$) zwischen einer unteren Grenze ($U_{inf}$) und einer oberen Grenze ($U_{sup}$) eines vorbestimmten Betriebsspannungsbereichs liegt.

3. Steuervorrichtung für ein elektrisches Schaltgerät nach Anspruch 2, **dadurch gekennzeichnet, dass** der Maximalwert ($I_{Smax}$) des Stroms einer Wärmeableitung in dem Steuerelement (4) kleiner oder gleich einem vorbestimmten Wärmeableitungsmaß entspricht.

4. Steuervorrichtung für ein elektrisches Schaltgerät nach einem der Ansprüche 1 bis 3, **dadurch gekennzeichnet, dass** sie ein Steuermodul aufweist, wobei das Steuerelement (4) Bestandteil des Steuermoduls (3) ist, das Steuerelement einen zugeordneten Widerstandswert (R') hat, das Steuermodul (3) außerdem ein Widerstandselement (16), das am Ausgang des Gleichrichterblocks (14) angeordnet ist, und einen zweiten Schalter (20) aufweist, der geeignet ist, eine Umschaltung zwischen der Verbindung mit dem Widerstandselement (16) und der Verbindung mit dem Steuerelement (4) am Ausgang des Gleichrichterblocks (14) durchzuführen, wobei das Widerstandselement (16) einen Widerstandswert (R) kleiner als der Widerstandswert des Steuerelementes (4) aufweist.

5. Steuervorrichtung für ein elektrisches Schaltgerät nach Anspruch 4, **dadurch gekennzeichnet, dass** der zweite Schalter (20) zwischen der Verbindung mit dem Widerstandselement (16) und der Verbindung mit dem Steuerelement (4) umschaltet, wenn die Spannung ($U_p$) am Ausgang des Gleichrichterblocks (14) eine Steuerschaltschwelle entsprechend

einer Versorgungsspannung ($U_e$) im Wesentlichen gleich dem vorbestimmten Betätigungsschwellenwert (Ut) überschreitet.

6. Steuervorrichtung für ein elektrisches Schaltgerät nach Anspruch 4 oder 5, **dadurch gekennzeichnet, dass** der Widerstandswert (R) des Widerstandselementes (16) kleiner als der Widerstandswert (R') des Steuerelementes (4) ist, um einen vorbestimmten Hysteresewert (H1) des zweiten Schalters sicherzustellen.

7. Steuervorrichtung für ein elektrisches Schaltgerät nach einem beliebigen der Ansprüche 1 bis 6, **dadurch gekennzeichnet, dass** der Kapazitätswert ($C_1$) des ersten Kondensators (6) so bestimmt wird, dass der dem Steuerelement (4) gelieferte Versorgungsstrom ($I_c$), wenn nur der erste Kondensator (6) in dem Versorgungsmodul (2) angeschlossen ist, gleich einem Maximalwert des Stroms ($I_{Smax}$) ist, wenn die Versorgungsspannung ($U_e$) gleich der oberen Grenze ($U_{sup}$) der Spannung ist.

8. Steuervorrichtung für ein elektrisches Schaltgerät nach Anspruch 7, **dadurch gekennzeichnet, dass** der Kapazitätswert ($C_2$) des zweiten Kondensators (8) so bestimmt wird, dass, wenn der erste (6) und der zweite (8) Kondensator in dem Versorgungmodul (2) angeschlossen sind, der an das Steuerelement (4) gelieferte Stromwert ($I_c$) mindestens gleich einem Minimalwert ($I_{Smin}$) ist, wenn die Versorgungsspannung ($U_e$) gleich der unteren Grenze ($U_{inf}$) der Spannung ist.

9. Steuervorrichtung für ein elektrisches Schaltgerät nach einem beliebigen der Ansprüche 7 oder 8, **dadurch gekennzeichnet, dass** der Schwellenwert ($U_c$) des Schaltens des Kondensators und ein zugeordneter Hysteresewert (H2) abhängig von einem Wert ($U_{cb}$) der Versorgungsspannung, für den der an das Steuerelement (4) gelieferte Versorgungsstrom den Maximalwert ($I_{Smax}$) des Stroms erreicht, wenn der erste (6) und zweite (8) Kondensator in dem kapazitiven Versorgungmodul (2) angeschlossen sind, und abhängig von einem Wert ($U_{cc}$) der Versorgungsspannung bestimmt werden, für den der an das Steuerelement (4) gelieferte Versorgungsstrom den Minimalwert ($I_{Smin}$) des Stroms erreicht, wenn nur der erste (6) Kondensator in dem kapazitiven Versorgungmodul (2) angeschlossen ist.

**Claims**

1. Device for controlling an electrical switchgear, comprising a capacitive power supply device and a control member (4) capable of controlling said electrical switchgear when the power supply voltage is below a predetermined actuation threshold (Ut), the capacitive power supply device comprising a power supply module (2) having two input terminals and a power supply voltage ($U_e$) between the two terminals, and capable of providing a power supply current to the control member (4), the power supply module (2) comprising a first capacitor (6, 6') connected at the input of a voltage rectification unit (14), said control member (4) being connected at the output of the rectification unit (14), the power supply device further comprising a second capacitor (8, 8') and a first switch (12) capable of connecting the second capacitor (8, 8') in series or in parallel at the output to the first capacitor as a function of a comparison of the power supply voltage ($U_e$) with a capacitor switching threshold value ($U_c$).

2. Device for controlling an electrical switchgear according to claim 1, **characterised in that** the values of the capacitances ($C_1$, $C_2$) of said first (6, 6') and second (8, 8') capacitor and the capacitor switching threshold value ($U_c$) are determined such that the power supply current provided to the control member (4) is neither below a minimum current value ($I_{s-min}$) nor above a maximum current value ($I_{s-max}$) as long as the power supply voltage ($U_e$) is between a lower bound ($U_{inf}$) and an upper bound ($U_{sup}$) of a predetermined operating voltage range.

3. Device for controlling an electrical switchgear according to claim 2, **characterised in that** the maximum current value ($I_{s-max}$) corresponds to a heat dissipation in the control member (4) which is less than or equal to a predetermined heat dissipation level.

4. Device for controlling an electrical switchgear according to any one of claims 1 to 3, **characterised in that** it comprises a control module (3), said control member (4) forming part of said control module (3), the control member (4) having an associated resistance value (R'), the control module (3) further comprising a resistive element (16) mounted at the output of the rectification unit (14), and a second switch (20) capable of switching between the connection of said resistive element (16) and the connection of the control member (4) at the output of the rectification unit (14), said resistive element (16) having a resistance value (R) lower than the resistance value of said control member (4).

5. Device for controlling an electrical switchgear according to claim 4, **characterised in that** the second switch (20) switches between the connection of said resistive element (16) and the connection of said control member (4) when the voltage ($U_p$) at the output of the rectification unit (14) exceeds a control switching threshold corresponding to a power supply

voltage ($U_e$) which is substantially equal to the predetermined actuation threshold (Ut).

6. Device for controlling an electrical switchgear according to claim 4 or 5, **characterised in that** the resistance value (R) of the resistive element (16) is lower than the resistance value (R') of the control member (4), so as to ensure a predetermined hysteresis value (H1) of the second switch.

7. Device for controlling an electrical switchgear according to any one of claims 1 to 6, **characterised in that** the capacitance value ($C_1$) of the first capacitor (6) is determined such that the power supply current ($I_c$) provided to the control member (4) when only the first capacitor (6) is connected in the power supply module (2) is equal to the maximum current value ($I_{s-max}$) when the power supply voltage ($U_e$) is equal to said upper voltage bound ($U_{sup}$).

8. Device for controlling an electrical switchgear according to claim 7, **characterised in that** the capacitance value ($C_2$) of the second capacitor (8) is determined such that, when said first (6) and second (8) capacitors are connected in the power supply module (2), the current level ($I_c$) provided to the control member (4) is at least equal to the minimum current value ($I_{s-min}$) when the power supply voltage ($U_e$) is equal to the lower voltage bound ($U_{inf}$).

9. Device for controlling an electrical switchgear according to either claim 7 or claim 8, **characterised in that** the capacitor switching threshold value ($U_c$) and an associated hysteresis value (H2) are determined as a function of a power supply voltage value ($U_{cb}$) at which the power supply current provided to the control member (4) reaches the maximum current value ($I_{s-max}$), when said first (6) and second (8) capacitors are connected in the capacitive power supply module (2), and of a power supply voltage value ($U_{cc}$) at which the power supply current provided to the control member (4) reaches the minimum current value ($I_{s-min}$), when only said first capacitor (6) is connected in the capacitive power supply module (2).

## FIG.1

## FIG.2

10

FIG.3

**EP 3 041 102 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5563758 A
- US 4331996 A
- EP 2469573 A2
- CN 103209513 A